# EUROPEAN PATENT APPLICATION

(11) **EP 4 183 818 A1**
(43) Date of publication of application: **24.05.2023**
(21) Application number: 21841973.7
(22) Date of filing: 13.07.2021
(51) Int. Cl.: C08J 3/03, C08L 29/04, C08L 67/02

(54) **POLYESTER RESIN AQUEOUS DISPERSION COMPOSITION AND METHOD FOR PRODUCING SAME**

(30) Priority: 14.07.2020 JP 2020120847
(71) Applicant: Sumitomo Seika Chemicals Co., Ltd., Kako-gun, Hyogo 675-0145 (JP)
(72) Inventor: KAKUTAKA, Ikumi, Himeji-shi, Hyogo 672-8076 (JP); HASHIMOTO, Naoki, Himeji-shi, Hyogo 672-8076 (JP)
(74) Representative: Vossius & Partner Patentanwälte Rechtsanwälte mbB
(86) International application number: PCT/JP2021/026223
(87) International publication number: WO 2022/014556

(57) **Abstract**

Provided is a method for efficiently producing an aqueous polyester resin dispersion composition in an excellent emulsification state with excellent adhesiveness. More specifically, provided is a method for producing an aqueous polyester resin dispersion composition, including mixing a melt-kneaded material of polyester and polyvinyl alcohol further with an aqueous solution of 3 to 10 mass% polyvinyl alcohol such that the total content of the polyester and the polyvinyl alcohol in the obtained mixture is 78 to 88 mass%.

## Description

### Technical Field

The present disclosure relates to a method for producing an aqueous polyester resin dispersion composition and an aqueous polyester resin dispersion composition. The content of the literature disclosed in the present specification is incorporated by reference in its entirety.

### Background Art

Aqueous polyester resin dispersion compositions have various applications, for example, in binders and fiber treatment agents.

### Citation List

### Patent Literature

PTL 1: JP2001-310944A
PTL 2: JPH10-139884A
PTL 3: JP2004-500466A
PTL 4: JP2011-032471A

### Summary of Invention

### Technical Problem

Given these applications, aqueous polyester resin dispersion compositions are preferably those formed such that a polyester resin is stably dispersed in an aqueous medium, exhibiting an excellent emulsification state and excellent adhesiveness.

The present inventors conducted research to find a method for efficiently producing such a preferable aqueous polyester resin dispersion composition.

### Solution to Problem

The present inventors found that such a preferable aqueous polyester resin dispersion composition may possibly be produced by mixing a melt-kneaded material of polyester and polyvinyl alcohol further with an aqueous polyvinyl alcohol solution of a specific concentration such that the total content of the polyester and the polyvinyl alcohol in the obtained mixture gives a specific concentration, and made further improvements.

The present disclosure includes, for example, the subject matter described in the following items.

### Item 1.

A method for producing an aqueous polyester resin dispersion composition, comprising the following step:
(2) mixing a melt-kneaded material of polyester and polyvinyl alcohol further with an aqueous solution of 3 to 10 mass% polyvinyl alcohol such that the total content of the polyester and the polyvinyl alcohol in the obtained mixture is 78 to 88 mass%.

### Item 2.

The method according to Item 1, further comprising, before step (2), step (1) of melt-kneading the polyester and the polyvinyl alcohol.

### Item 3.

The method according to Item 2, wherein in step (1), 0.1 to 5 parts by mass of the polyvinyl alcohol and 100 parts by mass of the polyester are melt-kneaded.

### Item 4.

The method according to any one of Items 1 to 3, comprising, after step (2), step (3) of further adding water to the obtained mixture.

### Item 5.

The method according to Item 4, wherein in step (3), the water is added such that the content of the polyester resin in the composition after the addition is 40 to 70 mass%.

### Item 6.

The method according to any one of Items 1 to 5, wherein the melt-kneaded material of the polyester and the polyvinyl alcohol in step (2) is a product prepared by melt-kneading the polyester and the polyvinyl alcohol at a temperature equal to or higher than the melting point of the polyester and lower than the melting point of the polyvinyl alcohol.

### Item 7.

The method according to any one of Items 1 to 6, wherein the mixing in step (2) is performed at a temperature that is equal to or higher than the melting point of the polyester and lower than the melting point of the polyvinyl alcohol, and that is equal to or lower than the temperature at which the melt-kneading for preparing the melt-kneaded material is performed. Item 8.

The method according to any one of Items 1 to 7, wherein the amount of the polyvinyl alcohol contained in the aqueous solution of 3 to 10 mass% polyvinyl alcohol is 0.8 to 6 parts by mass per part by mass of the polyvinyl alcohol for use in melt-kneading the polyester and the polyvinyl alcohol.

### Item 9.

A method for producing an aqueous polyester resin dispersion composition, comprising the steps of:
adding, in a twin-screw extruder equipped with a first feed port and a second feed port from upstream, polyester and polyvinyl alcohol from the first feed port to perform melt-kneading, and
supplying an aqueous solution of 3 to 10 mass% polyvinyl alcohol from the second feed port such that the total content of the polyester and the polyvinyl alcohol in the obtained mixture is 78 to 88 mass%, and mixing the aqueous solution with the melt-kneaded material.

### Item 10.

A method for producing an aqueous polyester resin dispersion composition, comprising the steps of:
adding, in a twin-screw extruder equipped with a first feed port, a second feed port, and a third feed port from upstream, polyester and polyvinyl alcohol from the first feed port to perform melt-kneading,
supplying an aqueous solution of 3 to 10 mass% polyvinyl alcohol from the second feed port such that the total content of the polyester and the polyvinyl alcohol in the obtained mixture is 78 to 88 mass%, and mixing the aqueous solution with the melt-kneaded material, and
supplying water from the third feed port.

### Item A.

An aqueous polyester resin dispersion composition obtained by the production method of any one of Items 1 to 10.

### Advantageous Effects of Invention

A method for efficiently producing an aqueous polyester resin dispersion composition in an excellent emulsification state with excellent adhesiveness is provided.

### Description of Embodiments

Embodiments that fall within the scope of the present disclosure are described in more detail below. The present disclosure preferably includes, but is not limited to, a method for producing an aqueous polyester resin dispersion composition. The present disclosure includes all matters that are disclosed in the present specification, and that can be recognized by a person skilled in the art.

The method for producing an aqueous polyester resin dispersion composition encompassed by the present disclosure includes step (2) of mixing a melt-kneaded material of polyester and polyvinyl alcohol further with an aqueous solution of 3 to 10 mass% polyvinyl alcohol such that the total content of the polyester and the polyvinyl alcohol in the obtained mixture is 78 to 88 mass%. In the present specification, the production method encompassed by the present disclosure may also be referred to as "the production method of the present disclosure."

The polyester for use in the production method of the present disclosure is preferably a copolymer of a dicarboxylic acid with a glycol. The copolymer can be obtained by condensation polymerization between a dicarboxylic acid and a glycol. Condensation polymerization can be performed, for example, according to a known method or a method easily conceivable from known methods.

The polyester preferably has a melting point of about 50 to 200°C. The upper limit or the lower limit of the melting point may be, for example, 60, 70, 80, 90, 100, 110, 120, 130, 140, 150, 160, 170, 180, or 190°C. For example, the melting point may be 60 to 190°C. The polyester preferably has a weight average molecular weight of about 5000 to 60000. The upper limit or the lower limit of the range may be, for example, 6000, 7000, 8000, 9000, 10000, 11000, 12000, 13000, 14000, 15000, 16000, 17000, 18000, 19000, 20000, 21000, 22000, 23000, 24000, 25000, 26000, 27000, 28000, 29000, 30000, 31000, 32000, 33000, 34000, 35000, 36000, 37000, 38000, 39000, 40000, 41000, 42000, 43000, 44000, 45000, 46000, 47000, 48000, 49000, 50000, 51000, 52000, 53000, 54000, 55000, 56000, 57000, 58000, or 59000. The range may be, for example, 6000 to 59000.

Preferable examples of dicarboxylic acids include terephthalic acid, isophthalic acid, and orthophthalic acid. The dicarboxylic acid can be used singly or in a combination of two or more.

Preferable examples of glycols include ethylene glycol, diethylene glycol, polyethylene glycol, 1,3-propanediol, 1,4-butanediol, and 1,6-hexanediol. The glycol can be used singly or in a combination of two or more.

The polyvinyl alcohol for use in the production method of the present disclosure is preferably, for example, polyvinyl alcohol with a weight average molecular weight of about 500 to 2500. The upper limit or the lower limit of the range of the weight average molecular weight may be, for example, 600, 700, 800, 900, 1000, 1100, 1200, 1300, 1400, 1500, 1600, 1700, 1800, 1900, 2000, 2100, 2200, 2300, or 2400. For example, the weight average molecular weight may be 600 to 2400. Polyvinyl alcohol with a degree of saponification of 70 to 99 mol% is also preferable. Specifically, polyvinyl alcohol is produced by saponifying polyvinyl acetate, and polyvinyl alcohol with a degree of this saponification of 70 to 99 mol% is preferable. The upper limit or the lower limit of the degree of saponification may be, for example, 71, 72, 73, 74, 75, 76, 77, 78, 79, 80, 81, 82, 83, 84, 85, 86, 87, 88, 89, 90, 91, 92, 93, 94, 95, 96, 97, or 98 mol%. For example, the degree of saponification may be 71 to 98 mol%.

The melt-kneaded material of polyester and polyvinyl alcohol can be prepared, for example, by using an extruder (in particular, a twin-screw extruder). The production method of the present disclosure may further include, before step (2), step (1) of melt-kneading the polyester and the polyvinyl alcohol.

The resin obtained by melt-kneading the polyester and the polyvinyl alcohol is also referred to as "polyester resin" in the present specification. More specifically, the polyester resin in the present specification can be described as a resin that contains polyester and that is contained in the melt-kneaded material of polyester and polyvinyl alcohol.

The polyester resin can be any resin that contains polyester. For example, the polyester resin may be a resin that consists essentially of polyester, or a resin that contains polyester and polyvinyl alcohol. A polyester resin produced by melt-kneading at a temperature equivalent to or higher than the melting point of the polyester for use and lower than the melting point of the polyvinyl alcohol for use can consist essentially of the polyester. The melt-kneading temperature for obtaining a resin that consists essentially of polyester is, for example, about 100 to 180°C, although the temperature varies according to the melting point of the polyester for use. The upper limit or the lower limit of the range may be, for example, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, 150, 151, 152, 153, 154, 155, 156, 157, 158, 159, 160, 161, 162, 163, 164, 165, 166, 167, 168, 169, 170, 171, 172, 173, 174, 175, 176, 177, 178, or 179°C. For example, the range may be 110 to 170°C or 120 to 160°C.

When the polyester resin contains polyester and polyvinyl alcohol, the polyester resin preferably contains the polyvinyl alcohol in an amount of, for example, 0.5 to 20 parts by mass, per 100 parts by mass of the polyester resin. The upper limit or the lower limit of the range may be, for example 1, 2, 3, 4, 5, 6, 7, 8, 9, 10, 11, 12, 13, 14, 15, 16, 17, 18, or 19 parts by mass. For example, the range may be 1 to 19 parts by mass. The content of the polyester and the polyvinyl alcohol is the following: preferably 0.1 to 5 parts by mass of the polyvinyl alcohol per 100 parts by mass of the polyester. The upper limit or the lower limit of the range may be 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, or 4.9 parts by mass. For example, the range may be 0.2 to 4 parts by mass.

The polyester resin preferably contains polyester in an amount of 90 to 100 mass%. The upper limit or the lower limit of the range may be, for example, 91, 92, 93, 94, 95, 96, 97, 98, or 99 mass%. For example, the range may be 91 to 99 mass%. The polyester resin may contain another resin in addition to the polyester and polyvinyl alcohol to the extent that the effects of the composition of the present disclosure are not impaired. For example, the polyester resin may contain a common thermoplastic resin (e.g., a polyolefin, a copolymer thereof, a polyamide, and a polyurethane) other than polyester. The polyester resin may also contain a polymeric emulsifier (an ethylene oxide-propylene oxide copolymer, polyvinyl ether, polyacrylamide, or hydroxyethyl cellulose) other than polyvinyl alcohol, a preservative, etc. These components can be mixed with the polyester resin, for example, in the melt-kneading stage.

The polyester resin is preferably, although not limited to, a resin consisting essentially of polyester, or a resin consisting of polyester and polyvinyl alcohol.

The polyester resin preferably has a median particle size of, for example, about 0.1 to 5 µm. The range may be, for example, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, or 4.9 µm. For example, the range may be 0.5 to 3 µm.

The median particle size is a median size and determined according to a laser diffraction particle size distribution measurement method. Specifically, the median particle size is a value determined by measuring an aqueous polyester resin dispersion composition with a laser diffraction particle size distribution analyzer. The analyzer can be, for example, a SALD-2300 analyzer (Shimadzu Corporation).

In step (2) included in the production method of the present disclosure, a melt-kneaded material of polyester and polyvinyl alcohol is further mixed with an aqueous solution of 3 to 10 mass% polyvinyl alcohol. The upper limit or the lower limit of the range (3 to 10 mass%) may be, for example, 3.5, 4, 4.5, 5, 5.5, 6, 6.5, 7, 7.5, 8, 8.5, 9, or 9.5 mass%. For example, the range may be 3.5 to 8 mass%.

The mixing is performed such that the total content of the polyester and the polyvinyl alcohol in the obtained mixture results in 78 to 88 mass%. Specifically, the mixing is performed such that the total content of the polyester and the polyvinyl alcohol present in the melt-kneaded material of polyester and polyvinyl alcohol and the polyvinyl alcohol present in the aqueous solution of 3 to 10 mass% polyvinyl alcohol accounts for 78 to 88 mass% of the obtained mixture. The upper limit or the lower limit of the range (78 to 88 mass%) may be, for example, 78.5, 79, 79.5, 80, 80.5, 81, 81.5, 82, 82.5, 83, 83.5, 84, 84.5, 85, 85.5, 86, 86.5, 87, or 87.5 mass%. The range may be, for example, 78.5 to 87.5 mass%.

The mixing can be performed by using, for example, an extruder (in particular, a twin-screw extruder).

The mixing is preferably performed at a temperature equal to or higher than the melting point of the polyester for use and lower than the melting point of the polyvinyl alcohol for use. The mixing is also preferably performed at a temperature equal to or lower than the temperature at which the melt-kneading of the polyester and polyvinyl alcohol is performed. Although it depends on the melting point of the polyester for use, the temperature for the mixing is, for example, about 100 to 170°C. The upper limit or the lower limit of the range may be, for example, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, 150, 151, 152, 153, 154, 155, 156, 157, 158, 159, 160, 161, 162, 163, 164, 165, 166, 167, 168, or 169°C. For example, the range may be 110 to 165°C or 120 to 160°C.

Because of the mixing, the obtained mixture liquid can preferably be emulsified.

In the melt-kneading of the polyester and polyvinyl alcohol, for example, about 0.1 to 5 parts by mass of the polyvinyl alcohol per 100 parts by mass of the polyester is preferably melt-kneaded. The upper limit or the lower limit of the range (0.1 to 5 parts by mass) may be 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, or 4.9 parts by mass. For example, the range may also be 0.2 to 4 parts by mass.

Preferably, the amount of the polyvinyl alcohol for use in melt-kneading the polyester and the polyvinyl alcohol is 1 part by mass, and the amount of the polyvinyl alcohol contained in the aqueous solution of 3 to 10 mass% polyvinyl alcohol for use in step (2) is 0.2 to 50 parts by mass. The upper limit or the lower limit of the range (0.2 to 50 parts by mass) may be 0.3, 0.4, 0.5, 0.6, 0.7, 0.8, 0.9, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, or 49 parts by mass. For example, the range may be 0.6 to 6.5 parts by mass. The range may be more preferably, for example, 0.8 to 6 parts by mass, or 1 to 5 parts by mass.

The mixture obtained by the mixing in step (2) can be preferably used as an aqueous polyester resin dispersion composition of the present disclosure.

The production method of the present disclosure may further optionally include, after step (2), step (3) of adding water to the obtained mixture (for example, in order to decrease the viscosity or the polyester resin concentration of the aqueous polyester resin dispersion composition). The water addition is preferably performed, for example, such that the content of the polyester resin in the composition after the addition is 40 to 70 mass%. The upper limit or the lower limit of the range may be, for example, 41, 42, 43, 44, 45, 46, 47, 48, 49, 50, 51, 52, 53, 54, 55, 56, 57, 58, 59, 60, 61, 62, 63, 64, 65, 66, 67, 68, or 69 mass%. For example, the range may be 45 to 65 mass%.

Steps (1) and (2) can be more efficiently performed, for example, by using a twin-screw extruder equipped with a first feed port and a second feed port from upstream. Steps (1) to (3) can be more efficiently performed, for example, by using a twin-screw extruder equipped with a first feed port, a second feed port, and a third feed port from upstream.

For example, steps (1) and (2) can be performed by adding polyester and polyvinyl alcohol from the first feed port to perform melt-kneading, supplying an aqueous solution of 3 to 10 mass% polyvinyl alcohol from the second feed port such that the total content of the polyester and the polyvinyl alcohol in the obtained mixture is 78 to 88 mass%, and mixing the aqueous solution with the melt-kneaded material.

Additionally, step (3) can be performed, for example, by supplying water from the third feed port.

In the present specification, the terms "comprise" and "contain" includes the concepts of consisting essentially of and consisting of. The present disclosure also encompasses any and all combinations of the elements described in the present specification.

The various characteristics (properties, structures, functions, etc.) described above for each embodiment of the present disclosure may be combined in any way in identifying the subject matter encompassed by the present disclosure. Specifically, the disclosure encompasses subject matter formed of any and every combination of the combinable characteristics described in the present specification.

### Examples

Embodiments of the present disclosure are described below in detail with reference to Examples. However, the embodiments of the present disclosure are not limited to the following Examples.

In the following study, the polyvinyl alcohol for use was Poval 40-80E in all cases (trade name, Kuraray Co., Ltd., degree of saponification: 79 to 81 mol%).

### Example 1

Two hoppers were attached to the first feed port located 80 mm from the upstream end of a twin-screw extruder (PCM-30, Ikegai Corp., L/D = 41.5, cylinder length: 1260 mm). Polyester (melting point: 95°C) was fed from one of the hoppers at 40 kg/hour, and polyvinyl alcohol was fed from the other hopper at 0.48 kg/hour.

Melt-kneading was performed at a cylinder temperature of 140°C and a rotation speed of 450 rpm until the mixture reached the second feed port located 480 mm from the upstream end of the twin-screw extruder, and an aqueous polyvinyl alcohol solution with a concentration of 8 mass% was fed at 9.2 kg/hour from the second feed port with a plunger pump.

The mixture was kneaded and emulsified at a cylinder temperature of 120°C and a rotation speed of 450 rpm with a solid concentration of 83 mass% (which is the total of the polyester and polyvinyl alcohol) until the mixture reached the third feed port located 1000 mm from the upstream end of the twin-screw extruder from the second feed port. Pure water was fed at 29.5 kg/hour with a plunger pump from the third feed port, and then melt-kneading was performed at a cylinder temperature of 90°C and a rotation speed of 450 rpm until the mixture reached the outlet of the twin-screw extruder from the third feed port, followed by discharging a product from the twin-screw extruder. This operation was performed for 10 minutes until the operation stabilized, and then the switching valve was opened. The aqueous polyester resin dispersion was fed into a stirred tank (internal volume: 5L) equipped with a propeller stirrer (propeller diameter: 58 mm, 3 blades), and stirred at 500 rpm.

The dispersion stirred in the stirred tank was fed into the inlet of a condenser tube and cooled at a cooling temperature of 40°C, followed by discharging the dispersion from the outlet of the condenser tube located 10,800 mm from the inlet of the condenser tube, thereby obtaining an aqueous polyester resin dispersion.

### Example 2

An aqueous polyester resin dispersion was obtained in the same manner as in Example 1, except that the polyvinyl alcohol fed from the first feed port was fed at 0.4 kg/hour, and the aqueous solution of 8 mass% (concentration) polyvinyl alcohol fed from the second feed port was fed at 10.3 kg/hour such that the solid concentration from the second feed port to the third feed port was 81.3%, and that the pure water fed from the third feed port was fed at 28.6 kg/hour.

### Example 3

An aqueous polyester resin dispersion was obtained in the same manner as in Example 1, except that the polyvinyl alcohol fed from the first feed port was fed at 0.6 kg/hour, and the aqueous solution of 8 mass% (concentration) polyvinyl alcohol fed from the second feed port was fed at 7.7 kg/hour such that the solid concentration from the second feed port to the third feed port was 85.3%, and that the pure water fed from the third feed port was fed at 30.9 kg/hour.

### Example 4

An aqueous polyester resin dispersion was obtained in the same manner as in Example 1, except that the pure water fed from the third feed port was fed at 19.0 kg/hour.

### Example 5

An aqueous polyester resin dispersion was obtained in the same manner as in Example 1, except that the polyester resin fed from the first feed port was fed at 30 kg/hour, the polyvinyl alcohol fed from the first feed port was fed at 0.4 kg/hour, the aqueous solution of 8 mass% (concentration) polyvinyl alcohol fed from the second feed port was fed at 6.9 kg/hour, and the pure water fed from the third feed port was fed at 22.1 kg/hour.

### Comparative Example 1

An aqueous polyester resin dispersion was obtained in the same manner as in Example 1, except that the polyvinyl alcohol fed from the first feed port was fed at 0.20 kg/hour, and the aqueous solution of 8 mass% (concentration) polyvinyl alcohol fed from the second feed port was fed at 17.5 kg/hour such that the solid concentration from the second feed port to the third feed port was 72.1%, and that the pure water fed from the third feed port was fed at 22.3 kg/hour.

### Comparative Example 2

The procedure of Example 1 was performed, except that the polyvinyl alcohol fed from the first feed port was fed at 0.8 kg/hour, and the aqueous solution of 8 mass% (concentration) polyvinyl alcohol fed from the second feed port was fed at 5.0 kg/hour such that solid concentration from the second feed port to the third feed port was 90.0%, and that that the pure water fed from the third feed port was fed at 33.4 kg/hour. Unemulsified polyester resin clogged the twin-screw extruder and resulted in failure to obtain an aqueous polyester resin dispersion.

The aqueous polyester resin dispersions obtained in the Examples and Comparative Examples were evaluated for median particle size and for whether the emulsification state is good or not, in accordance with the following methods.

### Median Particle Size

The obtained aqueous polyester resin dispersions were measured for the median particle size of the dispersed particles with a laser diffraction particle size distribution analyzer (trade name: SALD-2300, Shimadzu Corporation).

### Emulsification State

The emulsification state of the obtained aqueous polyester resin dispersions was visually evaluated. The evaluation criteria were as follows.
A: No unemulsified matter is observed.
B: Unemulsified matter is observed.

**Table 1**

| | | Median Particle Size (µm) | Emulsification State |
|---|---|---|---|
| Example | 1 | 1.78 | A |
| | 2 | 1.81 | A |
| | 3 | 1.93 | A |
| | 4 | 1.57 | A |
| | 5 | 1.86 | A |
| Comparative Example | 1 | - | B |
| | 2 | - | B (Due to poor emulsification, the twin-screw extruder was clogged.) |

The aqueous polyester resin dispersion of Example 1 was evaluated for adhesiveness in accordance with the following method. The aqueous polyester resin dispersion was evaluated as "A".

### Adhesiveness

The aqueous polyester resin dispersion obtained in Example 1 was applied to aluminum foil (width: 25 mm, thickness: 30 µm) with a coater (*Nippon Cedars Service K.K.,* bar coater No.4) to give a thickness of about 4 um on a dry film basis. The aluminum foil coated with the dispersion was dried by heating in an oven at 100°C for 1 minute, thereby forming a film.

Subsequently, polyvinyl chloride (PVC, width: 25 mm) was used as an adherend. The adherend was bonded to the obtained film by using a heat-sealing machine (trade name: TP-701, Tester Sangyo Co,. Ltd.). The heat-sealing conditions were as follows: sealing temperature 140°C, sealing pressure 2 kg/cm², and sealing time 3 seconds. The obtained heat-sealing substrate (composed of PVC, the dispersion film, and aluminum foil, width: 25 mm) was determined to be a test specimen. After the test specimen was cooled, a T-peel test was performed on the test specimen with a tensile tester (trade name: autograph AGS-J, Shimadzu Corporation) at a tension rate of 50 mm/min to measure the peel strength and evaluate the adhesiveness of the film. The evaluation criteria were as follows.
A: a peel strength of 15 N/25 mm or greater
B: a peel strength of lower than 15 N/25 mm

The aqueous polyester resin dispersions of the Comparative Examples were both unable to be evaluated due to poor emulsification. The following table shows the results.

**Table 2**

| | Adhesiveness |
|---|---|
| Example 1 | A (16.6 N/25 mm) |
| Comparative Example 1 | B (Evaluation was not possible due to poor emulsification) |
| Comparative Example 2 | B (Evaluation was not possible due to poor emulsification) |

## Claims

1. A method for producing an aqueous polyester resin dispersion composition, comprising the following step:
(2) mixing a melt-kneaded material of polyester and polyvinyl alcohol further with an aqueous solution of 3 to 10 mass% polyvinyl alcohol such that the total content of the polyester and the polyvinyl alcohol in the obtained mixture is 78 to 88 mass%.

2. The method according to claim 1, further comprising, before step (2), step (1) of melt-kneading the polyester and the polyvinyl alcohol.

3. The method according to claim 2, wherein in step (1), 0.1 to 5 parts by mass of the polyvinyl alcohol and 100 parts by mass of the polyester are melt-kneaded.

4. The method according to any one of claims 1 to 3, comprising, after step (2), step (3) of further adding water to the obtained mixture.

5. The method according to claim 4, wherein in step (3), the water is added such that the content of the polyester resin in the composition after the addition is 40 to 70 mass%.

6. The method according to any one of claims 1 to 5, wherein the melt-kneaded material of the polyester and the polyvinyl alcohol in step (2) is a product prepared by melt-kneading the polyester and the polyvinyl alcohol at a temperature equal to or higher than the melting point of the polyester and lower than the melting point of the polyvinyl alcohol.

7. The method according to any one of claims 1 to 6, wherein the mixing in step (2) is performed at a temperature that is equal to or higher than the melting point of the polyester and lower than the melting point of the polyvinyl alcohol, and that is equal to or lower than the temperature at which the melt-kneading for preparing the melt-kneaded material is performed.

8. The method according to any one of claims 1 to 7, wherein the amount of the polyvinyl alcohol contained in the aqueous solution of 3 to 10 mass% polyvinyl alcohol is 0.8 to 6 parts by mass per part by mass of the polyvinyl alcohol for use in melt-kneading the polyester and the polyvinyl alcohol.

9. An aqueous polyester resin dispersion composition obtained by the production method of any one of claims 1 to 8.
